# EUROPEAN PATENT SPECIFICATION

(11) **EP 3 263 866 B1**
(45) Date of publication and mention of the grant of the patent: **07.08.2019**
(21) Application number: 16290122.7
(22) Date of filing: 29.06.2016
(51) Int. Cl.: F02C 1/02, F02C 6/04, F02C 7/14, F02C 7/18, F02C 6/08

(54) **SYSTEM AND METHOD FOR GENERATING ELECTRICAL ENERGY IN A VEHICLE**
SYSTEM UND VERFAHREN ZUR ERZEUGUNG VON ELEKTRISCHER ENERGIE IN EINEM FAHRZEUG
SYSTÈME ET PROCÉDÉ DE PRODUCTION D'ÉNERGIE ÉLECTRIQUE DANS UN VÉHICULE

(43) Date of publication of application: 03.01.2018
(73) Proprietor: Airbus Operations GmbH, 21129 Hamburg (DE); Airbus SAS, 31707 Blagnac Cedex (FR)
(72) Inventor: Bammann, Holger, 21129 Hamburg (DE); Trümper, Torsten, 21129 Hamburg (DE); Sieme, Martin, 21129 Hamburg (DE); Schult, Jens, 21129 Hamburg (DE); Chen, Paul, 21129 Hamburg (DE); Poirier, Didier, 31700 Blagnac (FR)
(74) Representative: Schicker, Silvia

(56) References cited:
- EP-A2- 2 527 603
- WO-A1-03/019767
- WO-A2-02/066324
- US-B2- 9 328 661

## Description

The invention relates to a system and method for generating electrical energy in a vehicle, as well as to a use of such system and method.

Conventional systems and methods for generating electrical energy in a vehicle rely on fossil fuels. WO 03/019767 shows systems and methods for providing ballast loading for a turbogenerator.

A problem to be solved by the present invention is to provide a system and/or method for generating electrical energy in a vehicle in an efficient manner.

This problem is solved by a system and method with the features according to the respective independent claims.

The system for generating electrical energy in a vehicle comprises an engine having a bleed air output line, a turbo generator connected to the engine, and an electrical consumer connected to the turbo generator, wherein the turbo generator has a bleed air input line connected to the bleed air output line of the engine and is configured to be powered by bleed air from the engine, preferably the engine being a jet engine, preferably the turbo generator comprising at least one turbine, preferably two turbines in line, preferably being configured to drive at least one electrical generator with variable frequency or an electrical generator with constant frequency or HVDC (high-voltage direct current), preferably each being configured to drive one electrical generator, preferably the electrical generator being connected to a DC (direct current) converter, preferably the DC converter being connected to the electrical consumer.

The system may have a bleed air heat exchanger being arranged in the bleed air output line between the engine and the turbo generator, preferably the bleed air output line being configured to output bleed air from at least a sixth stage of the jet engine, preferably from only the sixth stage of the jet engine.

The system may have a bleed air valve being arranged in the bleed air input line between the engine and the turbo generator, preferably between the bleed air heat exchanger and the turbo generator, preferably the bleed air valve being a solenoid valve or a butterfly valve.

The system may have a gearbox being connected to the turbine, preferably the gearbox being in between the turbine and the electrical generator.

In the system, the turbo generator comprises an expanded bleed air output line which is configured to lead the expanded bleed air from the turbo generator, preferably from the turbine, wherein the expanded bleed air output line is connected to an expanded bleed air heat exchanger configured to cool the electrical consumer.

In the latter system, the electrical consumer is cooled by ambient or ram air through an ambient air- or ram air heat exchanger, preferably by ram air from an air scoop and/or a NACA scoop, preferably of an aircraft, preferably of an airplane. Providing both, an expanded bleed air heat exchanger and a ram air heat exchanger is advantageous, because the expanded bleed air heat exchanger can take up to 25% of the cooling load, such that ram air consumption and drag of the ram air heat exchanger can be reduced.

Additionally, in the latter system, the ram air heat exchanger and the expanded bleed air heat exchanger may be connected in parallel to cool a consumer cooling fluid flowing through a consumer cooling line, preferably an expanded bleed air heat exchanger valve being arranged downstream of the expanded bleed air heat exchanger and upstream of a confluence point of the respective sections of the consumer cooling line for the ram air heat exchanger and the expanded bleed air heat exchanger.

Some of the above systems may comprise a mechanical pump being arranged upstream of the expanded bleed air heat exchanger, preferably upstream of the ram air heat exchanger, preferably upstream of a diffluence point of the consumer cooling line, preferably a pressure reservoir being connected to the consumer cooling line upstream of the mechanical pump.

In any of the above systems the bleed air input line of the turbo generator may be connected to a second bleed air output line of a second engine and the turbo generator may be configured to be powered by bleed air from the first engine and from the second engine, preferably with the bleed air valve in between the turbo generator and both engines, preferably with an engine valve upstream of the bleed air valve towards the second engine and in between both engines configured to control the amount of bleed air from the second engine reaching the bleed air valve, preferably the engine valve is a solenoid valve or a butterfly valve.

In some of the above systems, a turbo generator heat exchanger may be connected to the turbo generator, preferably being configured to cool the electrical generator, preferably with the consumer cooling fluid of the consumer cooling line, preferably being arranged downstream of the ram air heat exchanger and/or the expanded bleed air heat exchanger, preferably being arranged upstream of the consumer. Thereby the turbo generator can be cooled, while enough cooling capacity is left in the consumer cooling fluid for the consumer.

In some of the above systems, the consumer cooling line may be configured to cool multiple electrical consumers in parallel or in line.

In some of the above systems, multiple consumer cooling lines may be configured to cool the electrical consumer.

A method for generating electrical energy in a vehicle with one of the above systems comprises the step of:
- leading bleed air from an engine to a turbo generator.

The Method comprises the additional step of:
- using the expanded bleed air from the turbo generator for cooling a consumer cooling fluid in a consumer cooling line,
- and preferably for cooling a DC converter.

A use of the system according to claims 1 to 9 or the method of claim 10 in an aircraft is provided, preferably in an airplane.

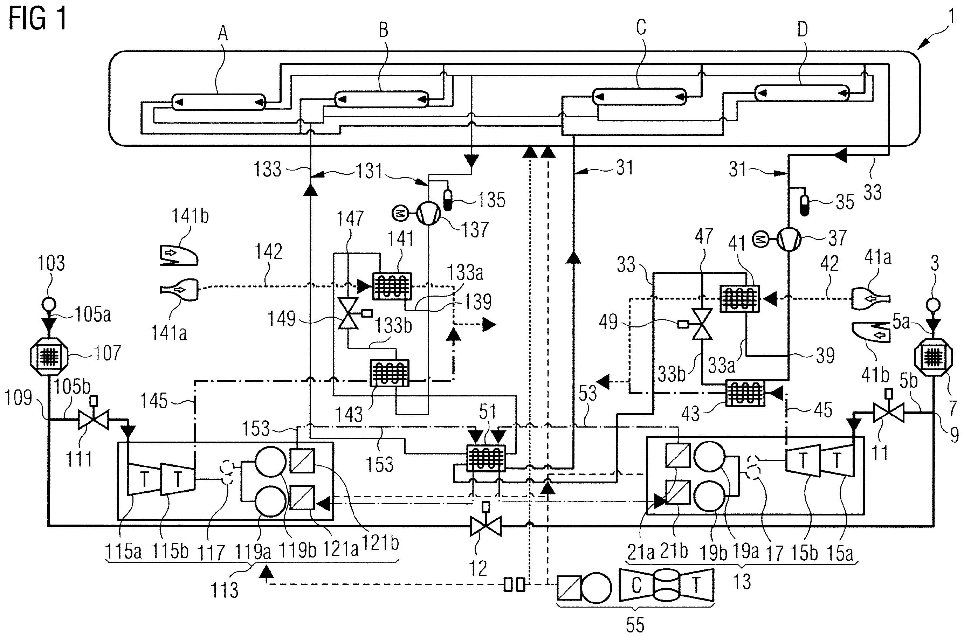

The invention will be further described under reference to the enclosed drawing, wherein similar elements have similar reference signs. In order to improve readability of the drawing, only some of the similar reference signs are provided while the other can obviously be derived by the skilled reader. In this drawing
- Fig. 1: is a schematic of an energy supply and cooling arrangement.

Fig. 1 shows a system 1 comprising an energy supply arrangement for generating and supplying electrical energy in an airplane. Of course, the system 1 can be applied to other types of vehicles with an engine that outputs hot air.

Here, a jet engine 3 of an airplane has a bleed air output line 5a leading bleed air from a sixth stage of the engine 3 downstream through a bleed air heat exchanger 7, which can use the hot bleed air from the engine 3 to heat an airplane cabin. Downstream of the bleed air heat exchanger 7 there is a confluence point 9. Bleed air from a second jet engine 103 can flow through a second bleed air output line 105a past an engine valve 12 configured to control the amount of bleed air from the second engine 103. The bleed air from the second engine 103 is added to the bleed air from the first jet engine 3 at the confluence point 9, which then flows through a bleed air input line 5b with a bleed air valve 11 to a turbo generator 13.

The turbo generator 13 comprises in a successive order two turbines 15a, 15b in line, a gearbox 17, two variable frequency generators 19a, 19b, and two DC (Direct Current) converters 21a, 21b. Of course, any other number of turbines 15a, 15b may be chosen, such as one or three, for example. Also, while the two turbines 15a, 15b each drive one of the two variable frequency generators 19a, 19b, they may also together drive only one variable frequency generator 19a, 19b. As a matter of course, it is possible that instead of a generator with variable frequency, a generator with constant frequency or HVDC (high-voltage direct current) is used. The generators 19a, 19b may be operated isolated form the electrical network of the vehicle, which does not affect certification of the electrical vehicle system, for example that of an aircraft. Alternatively, the generators 19a, 19b may be an integral part of the electrical network of the vehicle, thus allowing to reduce the number of engine driven generators and/or to provide a higher reliability for the electrical power generation. The two DC converters 21a, 21b, which very well may be AC converters, convert the electrical energy into an appropriate voltage level for electrical consumers A, B, C, D, here 270 VDC (Voltage Direct Current). Here, the consumers A, B, C, D are four, but may be any number.

An integrated or separated APU (Auxiliary Power Unit) 55 of the conventional kind, i.e. powered by fossil fuels, may further be provided in order to take over the energy supply of the consumers A, B, C, D, in case of a malfunction of the above system 1.

Fig. 1 further shows that the system 1 comprises a cooling arrangement.

Here, a cooling circuit 31 comprises a consumer cooling line 33 passing the consumers A, B, C, D and absorbing their heat in a cooling fluid flowing through the consumer cooling line 33 past a pressure reservoir 35 and a subsequently arranged cooling fluid pump 37. Downstream of the pump 37 a diffluence point 39 of the consumer cooling line 33 separates the consumer cooling line 33 into two branched consumer cooling lines 33a, 33b.

The first branched consumer cooling line 33a leads through a ram air heat exchanger 41 configured to cool the cooling fluid inside the first branched consumer cooling line 33a by ram air fed through a NACA scoop 41a or a ram air scoop 41b of the airplane. Such ram air is led through a ram air cooling line 42, which has a valve configured to control the amount of ram air reaching the ram air heat exchanger 41.

The second branched consumer cooling line 33b leads through an expanded bleed air- / exhaust air heat exchanger 43 configured to cool the cooling fluid inside the first branched consumer cooling line 33b by the expanded bleed- / exhausted air from the turbines 15a, 15b fed through an expanded bleed air output line 45.

Downstream of the ram air heat exchanger 41 and the expanded bleed air heat exchanger 43 the two branched consumer cooling lines 33a, 33b have a confluence point 47 from which the cooling fluid continues to flow inside the consumer cooling line 33. In order to adjust the amount of cooling fluid reaching this confluence point 47, a solenoid valve 49 is installed in the second branched consumer cooling line 33b downstream of the expanded bleed air heat exchanger 43. Of course, the solenoid valve 49 may alternatively be installed upstream of the expanded bleed air heat exchanger 43 in the second branched consumer cooling line 33b.

The now cooled down consumer cooling fluid is led through the consumer cooling line 33 to a turbo generator heat exchanger 51, where a turbo generator cooling circuit 53 transporting heat from the converters 21a, 21b is fed through and cooled by the consumer cooling fluid. Of course, the cooling fluid used in the system being be a fluid, may in particular be a liquid or more particularly oil.

Finally, the consumer cooling fluid flows through the consumer cooling line 33 to the consumers A, B, C, D, thereby closing the consumer cooling circuit 31.

Here, the heat exchangers 7, 41, 43, 51 may be tubular or plate-fin heat exchangers, for example. In particular, the ram air heat exchanger 41 may instead be an ambient air heat exchanger 41 mounted on a skin of the vehicle and cooled by ambient air.

As shown in Fig. 1, the above described elements of the system 1 on the right side of Fig. 1 are basically horizontally mirrored on the left side of Fig. 1 in order to increase safety of the entire system 1, for example if one side has a malfunction. Hence, the system 1 has two common consumer cooling circuits 31, 133 and two independent turbo generator cooling circuits 53, 153. However, the two turbo generator cooling circuits 53, 153 may also be made common.

In summary, the above system 1 can generate electrical power by using bleed air from an engine 3, 103 and cool electrical consumers A, B, C, D by reusing the expanded bleed air.

## Claims

1. System (1) for generating electrical energy in a vehicle, comprising
an engine (3) having a bleed air output line (5a),
a turbo generator (13) connected to the engine (3),
an electrical consumer (A, B, C, D) connected to the turbo generator (13), and an expanded bleed air heat exchanger (43),
wherein the turbo generator (13) has a bleed air input line (5b) connected to the bleed air output line (5a) of the engine (3) and is configured to be powered by bleed air from the engine (3),
wherein the turbo generator (13) comprises an expanded bleed air output line (45) which is configured to lead the expanded bleed air from the turbo generator (13),
wherein the expanded bleed air output line (45) is connected to the expanded bleed air heat exchanger (43) configured to cool the electrical consumer (A, B, C, D),
**characterized in that** the system further comprises a ram air heat exchanger (41) and **in that** the electrical consumer (A, B, C, D) is cooled by ram air through the ram air heat exchanger (41),
wherein the ram air heat exchanger (41) and the expanded bleed air heat exchanger (43) are connected in parallel to cool a consumer cooling fluid flowing through a consumer cooling line (33),
wherein downstream of the ram air heat exchanger (41) and the expanded bleed air heat exchanger (43) two branched consumer cooling lines (33a, 33b) have a confluence point (47) from which the cooling fluid continues to flow inside the consumer cooling line (33), and
wherein an expanded bleed air heat exchanger valve (49) is arranged downstream of the expanded bleed air heat exchanger (43) and upstream of the confluence point (47) of the respective sections of the consumer cooling line (33) for the ram air heat exchanger (41) and the expanded bleed air heat exchanger (43).

2. System (1) according to claim 1,
wherein a bleed air heat exchanger (7) is arranged in the bleed air output line (5a) between the engine (3) and the turbo generator (13),
preferably the bleed air output line (5a) being configured to output bleed air from at least a sixth stage of the jet engine (3),
preferably from only the sixth stage of the jet engine (3).

3. System (1) according to claim 1 or 2,
wherein a bleed air valve (11) is arranged in the bleed air input line (5b) between the engine (3) and the turbo generator (13),
preferably between the bleed air heat exchanger (7) and the turbo generator (13),
preferably the bleed air valve (11) being a solenoid valve or a butterfly valve.

4. System (1) according to any one of claims 1 to 3, wherein a gearbox (17) is connected to the turbine (15a; 15b),
preferably the gearbox (17) being in between the turbine (15a; 15b) and the electrical generator (19a; 19b).

5. System (1) according to any one of claims 1 to 4,
wherein a mechanical pump (37) is arranged upstream of the expanded bleed air heat exchanger (43),
preferably upstream of the ram air heat exchanger (41),
preferably upstream of a diffluence point (39) of the consumer cooling line (33),
preferably a pressure reservoir (35) being connected to the consumer cooling line (33) upstream of the mechanical pump (37).

6. System (1) according to any one of claims 1 to 5,
wherein the bleed air input line (5b) of the turbo generator (13) is connected to a second bleed air output line (105a) of a second engine (103) and the turbo generator (13) is configured to be powered by bleed air from the engine (3) and from the second engine (103),
preferably with the bleed air valve (11) in between the turbo generator (13) and both engines (3, 103),
preferably with an engine valve (12) upstream of the bleed air valve (11) towards the second engine (103) and in between both engines (3, 103) configured to control the amount of bleed air from the second engine (103) reaching the bleed air valve (11),
preferably the engine valve (12) is a solenoid valve or a butterfly valve.

7. System (1) according to any one of claims 1 to 6,
wherein a turbo generator heat exchanger (51) is connected to the turbo generator (13),
preferably being configured to cool the electrical generator (21a; 21b),
preferably with the consumer cooling fluid of the consumer cooling line (33),
preferably being arranged downstream of the ram air heat exchanger (41) and/or the expanded bleed air heat exchanger (43).

8. System (1) according to any one of claims 1 to 7, wherein the consumer cooling line (33) is configured to cool multiple electrical consumers (A, B, C, D) in parallel or in line.

9. System (1) according to any one of claims 1 to 8, wherein multiple consumer cooling lines (33, 133) are configured to cool the electrical consumer (A, B, C, D).

10. Method for generating electrical energy in a vehicle with a system (1) according to any one of the preceding claims, comprising the steps of:
- leading bleed air from an engine (3) to a turbo generator (13),
- using expanded bleed air from the turbo generator (13) for cooling a consumer cooling fluid in a consumer cooling line (33), and preferably for cooling a DC converter (21a; 21b),
**characterized by** the step of using ram air for cooling the consumer cooling fluid in the consumer cooling line (33) by
- connecting the ram air heat exchanger (41) and the expanded bleed air heat exchanger (43) in parallel, and
- downstream of the expanded bleed air heat exchanger (43), adjusting the amount of cooling fluid from one of the respective sections reaching the confluence point (47).

11. Use of the system (1) according to any one of claims 1 to 9 or the method according to claim 10 in an aircraft, preferably an airplane.

## Patentansprüche

1. System (1) zur Erzeugung von elektrischer Energie in einem Fahrzeug, umfassend:
ein Triebwerk (3) mit einer Ablassluft-Ausgangsleitung (5a),
einen Turbogenerator (13), der mit dem Triebwerk (3) verbunden ist,
einen elektrischen Verbraucher (A, B, C, D), der mit dem Turbogenerator (13) und einem Wärmetauscher (43) für expandierte Ablassluft verbunden ist,
wobei der Turbogenerator (13) eine Ablassluft-Einlassleitung (5b) aufweist, die mit der Ablassluft-Ausgangsleitung (5a) des Triebwerks (3) verbunden ist, und dazu ausgelegt ist, durch Ablassluft von dem Triebwerk (3) angetrieben zu werden,
wobei der Turbogenerator (13) eine Ausgangsleitung (45) für expandierte Ablassluft umfasst, die dazu ausgelegt ist, die expandierte Ablassluft von dem Turbogenerator (13) zu führen,
wobei die Ausgangsleitung (45) für expandierte Ablassluft mit dem Wärmetauscher (43) für expandierte Ablassluft verbunden ist, dazu ausgelegt, den elektrischen Verbraucher (A, B, C, D) zu kühlen,
**dadurch gekennzeichnet, dass** das System ferner einen Stauluft-Wärmetauscher (41) umfasst und dadurch, dass der elektrische Verbraucher (A, B, C, D) von Stauluft durch den Stauluft-Wärmetauscher (41) gekühlt wird,
wobei der Stauluft-Wärmetauscher (41) und der Wärmetauscher (43) für expandierte Ablassluft parallel angeschlossen sind, um ein Verbraucherkühlfluid, das durch eine Verbraucherkühlleitung (33) strömt, zu kühlen,
wobei dem Stauluft-Wärmetauscher (41) und dem Wärmetauscher (43) für expandierte Ablassluft nachgelagert zwei verzweigte Verbraucherkühlleitungen (33a, 33b) einen Zusammenflusspunkt (47) aufweisen, von dem das Kühlfluid weiter im Inneren der Verbraucherkühlleitung (33) strömt, und
wobei dem Wärmetauscher (43) für expandierte Ablassluft nachgelagert und dem Zusammenflusspunkt (47) der entsprechenden Abschnitte der Verbraucherkühlleitung (33) für den Stauluft-Wärmetauscher (41) und dem Wärmetauscher (43) für expandierte Ablassluft vorgelagert ein Wärmetauscherventil (49) für expandierte Ablassluft angeordnet ist.

2. System (1) nach Anspruch 1,
wobei ein Ablassluft-Wärmetauscher (7) in der Ablassluft-Ausgangsleitung (5a) zwischen dem Triebwerk (3) und dem Turbogenerator (13) angeordnet ist;
wobei die Ablassluft-Ausgangsleitung (5a) vorzugweise dazu ausgelegt ist, Ablassluft von mindestens einer sechsten Stufe des Strahltriebwerks (3) auszugeben, vorzugsweise nur von der sechsten Stufe des Strahltriebwerks (3).

3. System (1) nach Anspruch 1 oder 2,
wobei ein Ablassluftventil (11) in der Ablassluft-Eingangsleitung (5b) zwischen dem Triebwerk (3) und dem Turbogenerator (13) angeordnet ist,
vorzugsweise zwischen dem Ablassluft-Wärmetauscher (7) und dem Turbogenerator (13),
wobei das Ablassluftventil (11) vorzugsweise ein Magnetventil oder ein Schmetterlingsventil ist.

4. System (1) nach einem der Ansprüche 1 bis 3, wobei ein Getriebe (17) mit der Turbine (15a; 15b) verbunden ist,
wobei das Getriebe (17) vorzugsweise zwischen der Turbine (15a; 15b) und dem elektrischen Generator (19a; 19b) angeordnet ist.

5. System (1) nach einem der Ansprüche 1 bis 4,
wobei eine mechanische Pumpe (37) dem Wärmetauscher (43) für expandierte Ablassluft vorgelagert angeordnet ist,
vorzugsweise dem Stoßluft-Wärmetauscher (41) vorgelagert,
vorzugsweise einem Diffluenzpunkt (39) der Verbraucherkühlleitung (33) vorgelagert,
wobei vorzugsweise ein Druckbehälter (35), der mechanischen Pumpe (37) vorgelagert, mit der Verbraucherkühlleitung (33) verbunden ist.

6. System (1) nach einem der Ansprüche 1 bis 5,
wobei die Ablassluft-Eingangsleitung (5b) des Turbogenerators (13) mit einer zweiten Ablassluft-Ausgangsleitung (105a) eines zweiten Triebwerks (103) verbunden ist und der Turbogenerator (13) dazu ausgelegt ist, durch Ablassluft von dem Triebwerk (3) und von dem zweiten Triebwerk (103) angetrieben zu werden,
vorzugsweise mit dem Ablassluftventil (11) zwischen dem Turbogenerator (3) und beiden Triebwerken (3, 103),
vorzugsweise mit einem Triebwerksventil (12) dem Ablassluftventil (11) in Richtung des zweiten Triebwerks (103) vorgelagert und zwischen beiden Triebwerken (3, 103), dazu ausgelegt, die Menge von Ablassluft von dem zweiten Triebwerk (103), welche das Ablassluftventil (11) erreicht, zu steuern,
wobei das Triebwerksventil (12) vorzugsweise ein Magnetventil oder ein Schmetterlingsventil ist.

7. System (1) nach einem der Ansprüche 1 bis 6,
wobei ein Turbogenerator-Wärmetauscher (51) mit dem Turbogenerator (13) verbunden ist,
vorzugsweise dazu ausgelegt, den elektrischen Generator (21a; 21b) zu kühlen,
vorzugsweise mit dem Verbraucherkühlfluid der Verbraucherkühlleitung (33), vorzugsweise dem Stoßluft-Wärmetauscher (41) und/oder dem Wärmetauscher (43) für expandierte Ablassluft nachgelagert angeordnet.

8. System (1) nach einem der Ansprüche 1 bis 7, wobei die Verbraucherkühlleitung (33) dazu ausgelegt ist, mehrere elektrische Verbraucher (A, B, C, D) parallel oder in Reihe zu kühlen.

9. System (1) nach einem der Ansprüche 1 bis 8, wobei die mehreren Verbraucherkühlleitungen (33, 133) dazu ausgelegt sind, den elektrischen Verbraucher (A, B, C, D) zu kühlen.

10. Verfahren zum Erzeugen elektrischer Energie in einem Fahrzeug mit einem System (1) nach einem der vorangehenden Ansprüche, umfassend folgende Schritte:
- Leiten von Ablassluft von einem Triebwerk (3) zu einem Turbogenerator (13),
- Verwenden von Ablassluft von dem Turbogenerator (13) zum Kühlen eines Verbraucherkühlfluids in einer Verbraucherkühlleitung (33), und vorzugsweise zum Kühlen eines Gleichstromwandlers (21a; 21b),
**gekennzeichnet durch** den Schritt des Verwendens von Stoßluft zum Kühlen des Verbraucherkühlfluids in der Verbraucherkühlleitung (33) durch
- paralleles Anschließen des Stoßluft-Wärmetauschers (41) und des Wärmetauschers (43) für expandierte Ablassluft, und
- dem Wärmetauscher (43) für expandierte Ablassluft nachgelagert, Einstellen der Menge von Kühlfluid von einem der jeweiligen Abschnitte, die den Zusammenflusspunkt (47) erreichen.

11. Verwenden des Systems (1) nach einem der Ansprüche 1 bis 9 oder des Verfahrens nach Anspruch 10 in einem Luftfahrzeug, vorzugsweise einem Flugzeug.

## Revendications

1. Système (1) de production d'énergie électrique dans un véhicule, comprenant
un moteur (3) ayant une conduite de sortie d'air de prélèvement (5a),
un turbogénérateur (13) relié au moteur (3),
un consommateur électrique (A, B, C, D) relié au turbogénérateur (13), et un échangeur de chaleur à air de prélèvement détendu (43),
le turbogénérateur (13) ayant une conduite d'entrée d'air de prélèvement (5b) reliée à la conduite de sortie d'air de prélèvement (5a) du moteur (3) et étant conçu pour être alimenté en air de prélèvement provenant du moteur (3),
le turbogénérateur (13) comprenant une conduite de sortie d'air de prélèvement détendu (45) qui est conçue pour acheminer l'air de prélèvement détendu provenant du turbogénérateur (13),
la conduite de sortie d'air de prélèvement détendu (45) étant reliée à l'échangeur de chaleur à air de prélèvement détendu (43) conçu pour refroidir le consommateur électrique (A, B, C, D),
**caractérisé en ce que** le système comprend en outre un échangeur de chaleur à air dynamique (41) et **en ce que** le consommateur électrique (A, B, C, D) est refroidi par l'air dynamique à travers l'échangeur de chaleur à air dynamique (41),
l'échangeur de chaleur à air dynamique (41) et l'échangeur de chaleur à air de prélèvement détendu (43) étant reliés en parallèle pour refroidir un fluide de refroidissement de consommateur s'écoulant à travers une conduite de refroidissement de consommateur (33),
en aval de l'échangeur de chaleur à air dynamique (41) et de l'échangeur de chaleur à air de prélèvement détendu (43), deux conduites de refroidissement de consommateur ramifiées (33a, 33b) ayant un point de confluence (47) à partir duquel le fluide de refroidissement continue à circuler à l'intérieur de la conduite de refroidissement de consommateur (33), et
une vanne d'échangeur de chaleur à air de prélèvement expansé (49) étant disposée en aval de l'échangeur de chaleur à air dynamique détendu (43) et en amont du point de confluence (47) des sections respectives de la conduite de refroidissement de consommateur (33) pour l'échangeur de chaleur à air dynamique (41) et l'échangeur de chaleur à air de prélèvement détendu (43).

2. Système (1) selon la revendication 1,
un échangeur de chaleur à air de prélèvement (7) étant disposé dans la conduite de sortie d'air de prélèvement (5a) entre le moteur (3) et le turbogénérateur (13),
de préférence la conduite de sortie d'air de prélèvement (5a) étant conçue pour sortir l'air de prélèvement d'au moins un sixième étage du réacteur (3),
de préférence uniquement du sixième étage du réacteur (3).

3. Système (1) selon la revendication 1 ou 2,
une vanne de régulation d'air de prélèvement (11) étant disposée dans la conduite d'entrée d'air de prélèvement (5b) entre le moteur (3) et le turbogénérateur (13),
de préférence entre l'échangeur de chaleur à air de prélèvement (7) et le turbogénérateur (13),
de préférence la vanne de régulation d'air de prélèvement (11) étant une électrovanne ou une vanne papillon.

4. Système (1) selon l'une quelconque des revendications 1 à 3, une boîte d'engrenages (17) étant reliée à la turbine (15a ; 15b),
de préférence la boîte d'engrenages (17) se trouvant entre la turbine (15a ; 15b) et le générateur électrique (19a ; 19b).

5. Système (1) selon l'une quelconque des revendications 1 à 4,
une pompe mécanique (37) étant disposée en amont de l'échangeur de chaleur à air de prélèvement détendu (43),
de préférence en amont de l'échangeur de chaleur à air dynamique (41),
de préférence en amont d'un point de diffluence (39) de la conduite de refroidissement de consommateur (33),
de préférence un réservoir sous pression (35) étant relié à la conduite de refroidissement de consommateur (33) en amont de la pompe mécanique (37).

6. Système (1) selon l'une quelconque des revendications 1 à 5,
la conduite d'entrée d'air de prélèvement (5b) du turbogénérateur (13) étant reliée à une seconde conduite de sortie d'air de prélèvement (105a) d'un second moteur (103) et le turbogénérateur (13) étant conçu pour être alimenté en air de prélèvement provenant du moteur (3) et du second moteur (103),
de préférence avec la vanne de régulation d'air de prélèvement (11) étant entre le turbogénérateur (13) et les deux moteurs (3, 103),
de préférence une soupape de moteur (12) en amont de la vanne de régulation d'air de prélèvement (11) vers le second moteur (103) et entre les deux moteurs (3, 103) étant conçue pour commander la quantité d'air de prélèvement du second moteur (103) atteignant la vanne de régulation d'air de prélèvement (11),
de préférence la soupape de moteur (12) étant une électrovanne ou une vanne papillon.

7. Système (1) selon l'une quelconque des revendications 1 à 6,
un échangeur de chaleur de turbogénérateur (51) étant relié au turbogénérateur (13),
de préférence étant conçu pour refroidir le générateur électrique (21a ; 21b),
de préférence avec le fluide de refroidissement de consommateur de la conduite de refroidissement de consommateur (33),
de préférence disposé en aval de l'échangeur de chaleur à air dynamique (41) et/ou de l'échangeur de chaleur à air de prélèvement détendu (43).

8. Système (1) selon l'une quelconque des revendications 1 à 7, la conduite de refroidissement de consommateur (33) étant conçue pour refroidir plusieurs consommateurs électriques (A, B, C, D) en parallèle ou en ligne.

9. Système (1) selon l'une quelconque des revendications 1 à 8, plusieurs conduites de refroidissement de consommateur (33, 133) étant conçues pour refroidir le consommateur électrique (A, B, C, D).

10. Procédé de production d'énergie électrique dans un véhicule avec un système (1) selon l'une quelconque des revendications précédentes, comprenant les étapes consistant à :
acheminer l'air de prélèvement d'un moteur (3) à un turbogénérateur (13),
utiliser l'air de prélèvement détendu provenant du turbogénérateur (13) pour refroidir un fluide de refroidissement de consommateur dans une conduite de refroidissement de consommateur (33), et de préférence pour refroidir un convertisseur CC (21a ; 21b),
**caractérisé par** l'étape consistant à utiliser l'air de prélèvement pour refroidir le fluide de refroidissement de consommateur dans la conduite de refroidissement de consommateur (33) par les étapes consistant à
relier l'échangeur de chaleur à air dynamique (41) et l'échangeur de chaleur à air de prélèvement détendu (43) en parallèle, et
en aval de l'échangeur de chaleur à air de prélèvement détendu (43), ajuster la quantité de fluide de refroidissement d'une des sections respectives atteignant le point de confluence (47).

11. Utilisation du système (1) selon l'une quelconque des revendications 1 à 9 ou du procédé selon la revendication 10 dans un aéronef, de préférence un avion.
